# FASCICULE DE BREVET EUROPEEN

(11) **EP 3 536 398 B1**
(45) Date de publication et mention de la délivrance du brevet: **21.10.2020**
(21) Numéro de dépôt: 19159090.0
(22) Date de dépôt: 25.02.2019
(51) Int. Cl.: B01J 8/04

(54) **DISPOSITIF DE MELANGE D'UN FLUIDE POUR UN LIT CATALYTIQUE**
VORRICHTUNG ZUR MISCHUNG EINES FLUIDES FÜR EINEN KATALYTISCHEN BETT
MIXING APPARATUS OF A FLUID FOR A CATALYTIC BED

(30) Priorité: 07.03.2018 FR 1851949
(43) Date de publication de la demande: 11.09.2019
(73) Titulaire: IFP Energies nouvelles, 92852 Rueil-Malmaison Cedex (FR)
(72) Inventeur: AUGIER, Frederic, 92852 RUEIL-MALMAISON CEDEX (FR); BEARD, Philippe, 92852 RUEIL-MALMAISON CEDEX (FR); PLAIS, Cecile, 92852 RUEIL-MALMAISON CEDEX (FR)

(56) Documents cités:
- WO-A1-2014/210276
- FR-A1- 3 034 323

## Description

### Domaine technique

La présente invention s'applique dans le domaine des réactions exothermiques et plus particulièrement aux réactions d'hydrotraitement, d'hydrodésulfuration, d'hydrodéazotation, d'hydrocraquage, d'hydrogénation, d'hydrodéoxygénation, d'hydroisomérisation, d'hydrodéparaffinage ou encore d'hydrodéaromatisation réalisées dans un réacteur en lit fixe. L'invention concerne plus particulièrement un dispositif de mélange et de distribution de fluides dans un réacteur à écoulement co-courant descendant et son utilisation pour la réalisation de réactions exothermiques.

### Etat de la technique

Les réactions exothermiques réalisées par exemple en raffinage et/ou en pétrochimie nécessitent d'être refroidies par un fluide additionnel, appelé fluide de trempe, pour éviter un emballement thermique du réacteur catalytique dans lequel elles sont effectuées. Les réacteurs catalytiques utilisés pour ces réactions comprennent généralement au moins un lit de catalyseur solide. Le caractère exothermique des réactions nécessite de conserver un gradient axial de température homogène sur la section de réacteur, et un gradient radial de température proche de zéro au sein du réacteur afin d'éviter l'existence de points chauds dans le lit de catalyseur compris dans le réacteur. Des zones trop chaudes peuvent diminuer prématurément l'activité du catalyseur et/ou conduire à des réactions non sélectives et/ou conduire à des emballements thermiques. Il est donc important de disposer d'au moins une chambre de mélange dans un réacteur, située entre deux lits de catalyseur, qui permette une répartition homogène en température des fluides sur une section de réacteur et un refroidissement des fluides réactionnels à une température désirée.

Pour effectuer cette homogénéisation l'homme de l'art est souvent conduit à utiliser un agencement spécifique d'internes souvent complexes comportant une introduction du fluide de trempe la plus homogène possible dans la section du réacteur. Par exemple, le document FR 2 824 495 A1 décrit un dispositif de trempe permettant d'assurer un échange efficace entre le ou les fluide(s) de trempe et le ou les fluide(s) du procédé. Ce dispositif est intégré dans une enceinte et comprend une canne d'injection du fluide de trempe, un baffle de collecte des fluides, la boite de trempe proprement dite, opérant le mélange entre le fluide de trempe et le fluide réactionnel s'écoulant de manière descendante, et un système de distribution composé d'une cuvette perforée et d'un plateau de distribution. La boîte de trempe comporte un déflecteur assurant la mise en mouvement tourbillonnaire des fluides selon une direction sensiblement non radiale et non parallèle à l'axe de ladite enceinte et en aval du déflecteur, dans le sens de circulation du fluide réactionnel, au moins une section de passage de sortie du mélange de fluides formé dans la boîte. Cependant, un tel dispositif présente de nombreux inconvénients :
- le dispositif ne s'avère pas suffisant en terme d'efficacité de mélange et de distribution des fluides, notamment pour des débits de fluides élevés (fluide de trempe et/ou fluide réactionnel) ;
- le dispositif est assez encombrant, et donc l'espace perdu dans un réacteur utilisant un tel dispositif se fait au détriment de la quantité de catalyseur pouvant être utilisée.

Un but de la présente invention vise à remédier aux problèmes rencontrés ci-avant en proposant un dispositif de mélange et de distribution permettant une meilleure efficacité de mélange des fluides et donc permettant une meilleure répartition des fluides sur le plateau de distribution, sans pour autant perdre, voire en gagnant, en compacité. FR-A-3 034 323 décrit un dispositif de mélange et de distribution de fluides.

### Objets de l'invention

La présente invention a pour objet un dispositif de mélange et de distribution de fluides pour un réacteur catalytique à écoulement descendant, ledit dispositif comprenant :
- au moins une zone de collecte comprenant au moins un moyen de collecte ;
- au moins une conduite de collecte sensiblement verticale apte à recevoir un fluide réactionnel collecté par ledit moyen de collecte et au moins un moyen d'injection débouchant dans ladite conduite de collecte pour injecter un fluide de trempe ;
- au moins une zone de mélange, située en aval de ladite conduite de collecte dans le sens de circulation des fluides, ladite zone de mélange comprenant au moins une enceinte de mélange des fluides de longueur L1, ladite zone de mélange comprenant une première extrémité en communication avec ladite conduite de collecte et une seconde extrémité en communication avec une enceinte d'échange des fluides de longueur L2, située en-dessous de ladite enceinte de mélange, la longueur L2 de ladite enceinte d'échange étant strictement supérieure à la longueur L1 de ladite enceinte de mélange de manière à créer un plafond au niveau de ladite enceinte d'échange, ledit plafond comprenant au moins une ouverture apte au passage des fluides de ladite enceinte d'échange vers une zone de distribution ;
- au moins une zone de distribution, située en-dessous de la zone de mélange, en aval de ladite zone de mélange dans le sens de la circulation des fluides, ladite zone de distribution comprenant un plateau de distribution supportant une pluralité de cheminées et une pluralité de panneaux horizontaux, située en-dessous de l'ouverture du plafond de l'enceinte d'échange, mais au-dessus des cheminées ou sur les cheminées du plateau de distribution de la zone de distribution.

De préférence, le rapport entre la longueur L1 de l'enceinte de mélange et la longueur L2 de l'enceinte d'échange est compris entre 0,1 et 0,9.

Avantageusement, le pourcentage en surface occupé par la ou les ouverture(s) est compris entre 20 et 100% par rapport à la surface totale du plafond.

Dans un mode de réalisation particulier, le pourcentage en surface occupé par la ou les ouverture(s) est égal à 100% de la surface totale du plafond.

Dans un mode de réalisation selon l'invention, lesdits panneaux horizontaux se situent à une hauteur d'au plus 100 mm au-dessus des cheminées du plateau de distribution.

Dans un autre mode de réalisation selon l'invention, lesdits panneaux horizontaux se situent sur les cheminées du plateau de distribution.

Avantageusement, la surface de la section transversale occupée par lesdits panneaux horizontaux est dans la plage de 2 à 95 % de la surface de la section transversale de la zone de distribution (C).

Avantageusement, lesdits panneaux horizontaux sont espacés les uns des autres d'une distance comprise entre 1 et 50 mm.

Dans un mode de réalisation selon l'invention, ladite zone de mélange est décentrée par rapport à l'axe central de la zone de distribution, formant deux zones (Z1) et (Z2) sur le plateau de distribution dont le ratio R défini comme le rapport entre la surface de la zone (Z1) et la zone (Z2) est compris entre 0 et 1, les valeurs 0 et 1 étant exclues.

Dans un mode de réalisation selon l'invention, l'enceinte de mélange comprend un fond comportant une bordure d'extrémité de forme biseautée et forme un angle apar rapport à l'axe longitudinal XX' de l'enceinte de mélange (15) compris entre 20° et 70°.

Dans un mode de réalisation selon l'invention, le moyen d'injection est complété d'une buse débouchant directement dans ladite conduite de collecte, ladite buse consistant en un tube comprenant au moins un orifice débouchant dans ladite conduite de collecte.

Avantageusement, ladite enceinte d'échange comprend en outre sur ses parois latérales une pluralité de sections de passage latéral apte au passage des fluides de ladite enceinte d'échange à ladite zone de distribution.

De préférence, le dispositif selon l'invention comprend en outre au moins un déflecteur latéral situé au niveau de ladite zone de distribution en vis-à-vis d'au moins une section de passage latéral.

Avantageusement, le ratio en volume entre ladite enceinte de mélange et ladite enceinte de d'échange est compris entre 5 et 60 %.

Un autre objet selon l'invention concerne un réacteur catalytique à écoulement descendant comportant une enceinte renfermant au moins deux lits fixes de catalyseur séparés par une zone intermédiaire comportant un dispositif de mélange et de distribution de fluides selon l'invention.

### Description des figures

La figure 1 représente une coupe axiale d'un réacteur catalytique à écoulement descendant comprenant au moins deux lits de catalyseur solide, et comprenant un dispositif de mélange et de distribution de fluides selon l'invention.
La figure 2 est une vue en perspective de la zone de mélange (B) du dispositif selon l'invention.
La figure 3 représente une vue en perspective de la zone de mélange (B) du dispositif selon l'invention comprenant des sections de passage latéral.
La figure 4 représente une coupe transversale du dispositif selon l'invention, lequel dispositif comprend une pluralité de panneaux horizontaux **33.**
La figure 5 représente une coupe transversale du dispositif selon l'invention selon un mode de réalisation particulier. La zone de mélange (B) est décentrée par rapport à l'axe central de la zone de distribution (C) formant ainsi un plateau de distribution **12** comprenant deux zones, **Z1** et **Z2**, de surfaces différentes.
La figure 6 représente une vue en coupe selon l'axe (XX') de la zone de mélange (B) d'un mode de réalisation particulier du dispositif selon l'invention.

### Description détaillée de l'invention

### Définitions

Au sens de l'invention, on entend par enceinte de mélange, l'espace dans lequel on réalise le mélange entre un fluide réactionnel et un fluide de trempe.

On entend par enceinte d'échange, l'espace dans lequel un fluide réactionnel et un fluide de trempe mélangés sont en contact direct avec une zone de distribution des fluides via au moins une ouverture.

### Description détaillée

Tous les modes de réalisations décrits ci-après font partie de la divulgation générale de l'invention et sont combinables entre eux.
Le dispositif de mélange et de distribution selon l'invention est utilisé dans un réacteur dans lequel s'effectuent des réactions exothermiques telles que des réactions d'hydrotraitement, d'hydrodésulfuration, d'hydrodéazotation, d'hydrocraquage, d'hydrogénation, d'hydrodéoxygénation, d'hydroisomérisation, d'hydrodéparaffinage ou encore d'hydrodéaromatisation. Généralement, le réacteur a une forme allongée le long d'un axe sensiblement vertical. On fait circuler du haut vers le bas dudit réacteur au moins un fluide réactionnel (appelé aussi «*process fluid*» selon la terminologie anglo-saxonne) à travers au moins un lit fixe de catalyseur. Avantageusement, en sortie de chaque lit à l'exception du dernier, le fluide réactionnel est recueilli puis est mélangé à un fluide de trempe (appelé aussi «*quench fluid*» selon la terminologie anglo-saxonne) dans ledit dispositif avant d'être distribué sur lit de catalyseur situé en aval d'un plateau de distribution. L'aval et l'amont sont définis par rapport au sens de l'écoulement du fluide réactionnel. Le fluide réactionnel peut être un gaz ou un liquide ou un mélange contenant du liquide et du gaz ; cela dépend du type de réaction effectuée dans le réacteur.

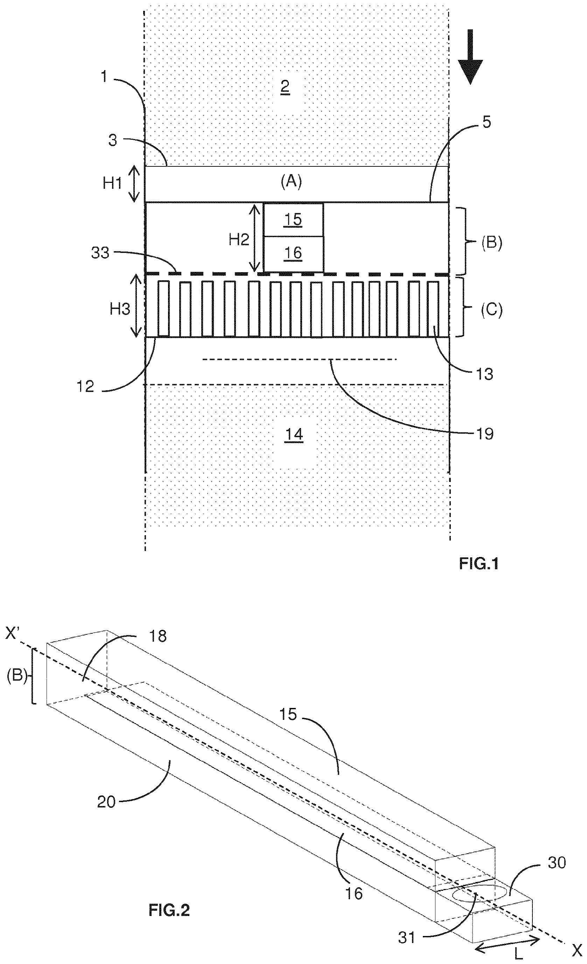

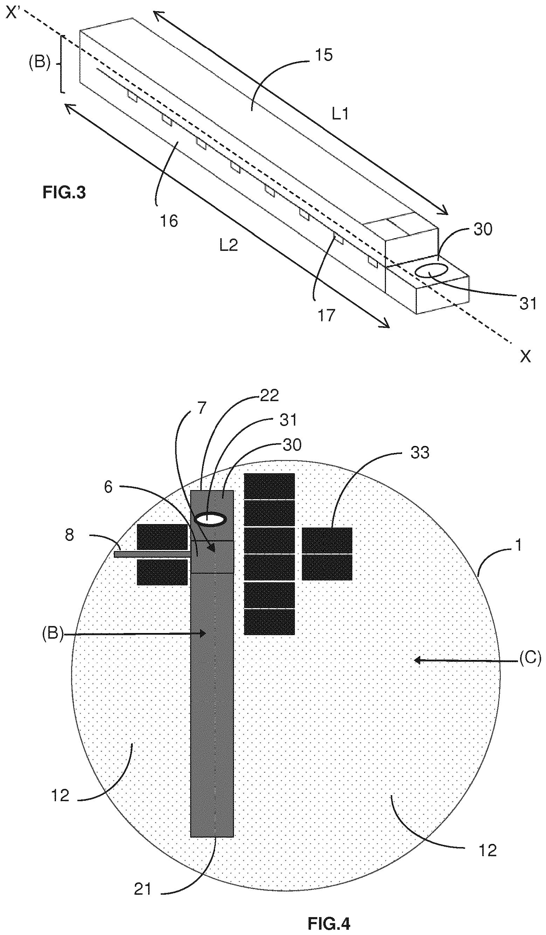

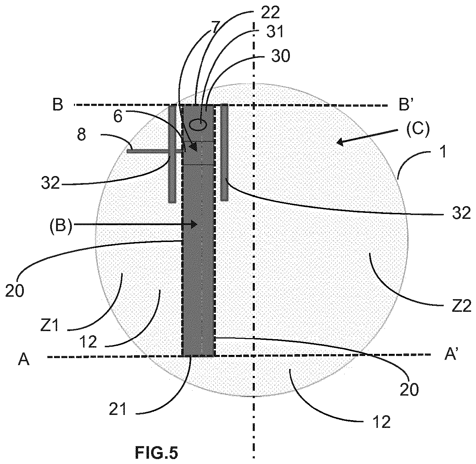

En se reportant à la figure 1, le dispositif de mélange et de distribution peut être disposé dans un réacteur **1** de forme allongée le long d'un axe sensiblement vertical dans lequel on fait circuler du haut vers le bas au moins un fluide réactionnel à travers au moins un lit de catalyseur **2.** Le dispositif est disposé sous le lit de catalyseur **2**, par rapport au sens d'écoulement du fluide réactionnel dans l'enceinte **1.** Une grille de support **3** permet de supporter le lit de catalyseur **2** de manière à dégager une zone de collecte (A) disposée sous le lit de catalyseur **2.** La zone de collecte (A) est nécessaire pour permettre le drainage du fluide réactionnel jusqu'à une conduite de collecte **7** (cf. figures 4 et 5). Un fluide de trempe est injecté dans la conduite de collecte **7** via un moyen d'injection **8** du fluide de trempe (cf. figures 4 et 5). Le fluide de trempe peut être liquide ou gazeux ou un mélange contenant du liquide ou du gaz.
Le fluide réactionnel traversant le lit de catalyseur **2** est collecté par un moyen de collecte **5** (appelé aussi ici baffle de collecte) sensiblement horizontal conduisant à la conduite de collecte **7** sensiblement verticale, disposée soit en-dessous de la zone de collecte (A) au niveau d'une zone appelée zone de mélange (B) (telle que représentée sur les figures 1, 4 et 5), soit au niveau de la zone de collecte (A) (non représentée sur les figures). Par sensiblement vertical(e) et par sensiblement horizontal(e), on entend au sens de la présente invention une variation d'un plan avec la verticale, respectivement l'horizon, d'un angle β compris entre ± 5 degrés. Le moyen de collecte **5** (cf. figure 1) est constitué d'une plaque pleine disposée dans le plan perpendiculaire à l'axe longitudinal de l'enceinte sous la grille de support **3** du lit de catalyseur **2.** La plaque du moyen de collecte **5** s'étend radialement sur toute la surface du réacteur **1.** Elle comporte à une de ses extrémités une ouverture **6** (cf. figures 4 et 5) à laquelle est reliée ladite conduite de collecte **7.** Le moyen de collecte **5** permet de recueillir l'écoulement du fluide réactionnel provenant du lit catalytique **2** en amont et de le diriger vers ladite conduite de collecte **7.** Le moyen de collecte **5** est distant de la grille de support **3** du lit de catalyseur **2** d'une hauteur H1 (figure 1). La hauteur H1 est choisie de manière à limiter la perte de charge lors de la collecte du fluide s'écoulant du lit de catalyseur **2** et à limiter la hauteur de garde, i.e. la hauteur formée par le liquide accumulé dans le moyen de collecte **5.** La hauteur de garde ne modifie pas le drainage du fluide réactionnel vers la conduite de collecte **7**, ni son écoulement dans cette conduite, ni son écoulement à travers le lit catalytique supérieur **2.** Lorsque la conduite de collecte **7** et le moyen d'injection **8** (figures 4 et 5) sont situés au niveau de la zone de mélange (B), la hauteur H1 est comprise entre 10 et 500 mm, de préférence entre 10 et 200 mm, plus préférentiellement entre 30 et 150 mm, de manière encore plus préférée entre 40 et 100 mm. Ainsi, le fluide réactionnel issu du lit **2** est contraint dans la zone de collecte (A) à passer par la conduite de collecte **7.** Lorsque la conduite de collecte **7** et le moyen d'injection **8** sont situés au niveau de la zone de collecte (A), la hauteur H1 est comprise entre 10 et 400 mm, de préférence entre 30 et 300 mm, et encore plus préférentiellement entre 50 et 250 mm.
De préférence, la conduite de collecte **7** et le moyen d'injection **8** du fluide de trempe sont situés au niveau de la zone de mélange (B), cela permettant de gagner en compacité. L'espace gagné par la compacité du dispositif peut être ainsi utilisé pour les lits de catalyseur.

En-dessous de la zone de collecte (A) se trouve une zone de mélange (B). En se reportant aux figures 1 à 5, la zone de mélange (B) comprend une conduite de collecte **7** sensiblement verticale apte à recevoir le fluide réactionnel collecté par le moyen de collecte **5** et le fluide de trempe provenant du moyen d'injection **8** (cf. figure 4) débouchant dans ladite conduite de collecte **7.**

La zone de mélange (B) comprend une enceinte de mélange **15**, de longueur L1 (cf. figure 3) située en aval du moyen de collecte dans le sens de circulation des fluides. La section de l'enceinte de mélange **15** est de préférence rectangulaire. La conduite de collecte **7**, qui est en communication avec l'enceinte de mélange **15**, peut être située au-dessus de l'enceinte de mélange **15** ou être incluse dans ladite enceinte de mélange **15.** De préférence, la conduite de collecte **7** est incluse dans l'enceinte de mélange **15.** De même, la conduite d'injection **8** peut déboucher au-dessus de l'enceinte de mélange **15**, au même niveau que ladite enceinte, ou directement à l'intérieur de ladite enceinte de mélange **15** par l'intermédiaire d'un dispositif connu de l'homme de métier, par exemple un tube perforé traversant la zone de mélange **15.** L'injection du fluide de trempe peut être réalisée à co-courant, en courant croisé, voire en contre-courant par rapport au fluide réactionnel provenant de la zone de collecte (A). La zone de mélange (B) comprend également une enceinte d'échange **16** des fluides, de longueur L2 (cf. figure 3), l'enceinte d'échange **16** étant située en aval de l'enceinte de mélange **15** dans le sens de la circulation des fluides. La section de l'enceinte d'échange **16** est de préférence rectangulaire. Selon l'invention, l'enceinte d'échange **16** est située au-dessous de l'enceinte de mélange **15.** De préférence, l'enceinte de mélange **15** est superposée à l'enceinte d'échange **16.** Les fluides passent de l'enceinte de mélange **15** à l'enceinte d'échange **16** via une ouverture **18** (cf. figure 2) située à l'extrémité de sortie de l'enceinte de mélange **15** dans le sens de la circulation des fluides. La configuration de la zone de mélange (B) permet le mélange des fluides dans l'enceinte de mélange **15** et l'écoulement dudit mélange vers l'enceinte d'échange **16.** Le mélange entre le fluide réactionnel et le fluide de trempe continue de s'effectuer au niveau de l'enceinte d'échange **16.**

Selon l'invention, la longueur L2 de l'enceinte d'échange **16** est strictement supérieure à la longueur L1 de l'enceinte de mélange **15**, de manière à créer un plafond **30** au niveau de ladite enceinte d'échange **16**, ledit plafond **30** comprenant au moins une ouverture **31** apte au passage des fluides de ladite enceinte d'échange **16** à ladite zone de distribution (C). Ladite ouverture **31** peut indifféremment se présenter sous la forme d'un ou plusieurs orifices de géométrie quelconque et/ou d'une ou plusieurs fentes. Un tel agencement du dispositif selon l'invention permet, en créant une ouverture **31** sur l'enceinte d'échange, de mieux gérer le débit des fluides, notamment de type gaz, sortant de l'enceinte d'échange **16**, et donc de limiter l'impact du débit des fluides sur le plateau de distribution **12** de la zone de distribution (C). De préférence, le rapport entre la longueur L1 de l'enceinte de mélange **15** et la longueur L2 de l'enceinte d'échange **16** est compris entre 0,1 et 0,9, de préférence entre 0,3 et 0,9. Avantageusement, le pourcentage en surface occupé par la ou les ouverture(s) **31** est compris entre 20 et 100% par rapport à la surface totale du plafond **30**, de préférence entre 30 et 80% en surface. Dans un mode de réalisation particulier selon l'invention, le pourcentage en surface de ladite ouverture **31** est égal à 100 % de la surface totale du plafond **30** et ce qui signifie que le plafond **30** est totalement ouvert sur la zone de distribution (C).

Avantageusement, les extrémités des enceintes de mélange **15** et d'échange **16** ne sont pas en contact avec la paroi de l'enceinte du réacteur **1**, de manière à permettre la circulation des fluides sur le plateau de distribution **12** de part et d'autre des enceintes de mélange **15** et d'échange **16.** Avantageusement, l'enceinte de mélange **15** et la ou les enceinte(s) d'échange **16** constituent une seule pièce.

La hauteur H2 totale cumulée de ladite enceinte de mélange **15** et de ladite enceinte d'échange **16** est comprise entre 200 et 1500 mm, de préférence entre 200 et 800 mm, plus préférentiellement entre 300 et 750 mm, et encore plus préférentiellement entre 350 et 700 mm.
De préférence, la largeur « L » (cf. figure 2) de l'enceinte d'échange **16** est comprise entre 200 et 1100 mm, de préférence entre 200 et 800 mm, plus préférentiellement entre 250 et 700 mm, et encore plus préférentiellement entre 300 et 600 mm.

Le ratio des volumes (en %) entre l'enceinte de mélange **15** et l'enceinte d'échange **16** est compris entre 10 et 90 %, de préférence entre 50 et 90%, et encore plus préférentiellement entre 75 et 90%.

Dans un mode de réalisation particulier selon l'invention (non représenté sur les figures), le moyen d'injection **8** du fluide de trempe tel que décrit ci-avant peut être complété d'une buse débouchant directement dans la conduite de collecte **7**, ladite buse consistant en un tube comprenant au moins un orifice débouchant dans ladite conduite de collecte **7.** De préférence, ladite buse comprend une pluralité d'orifices répartis uniformément sur toute la surface dudit tube. La forme des orifices peut être très variable, généralement circulaire ou rectangulaire, ces orifices étant préférentiellement répartis uniformément sur toute la surface de la buse.

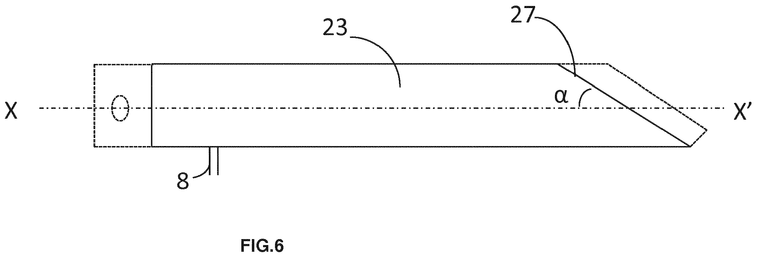

Avantageusement, le fond **23** de l'enceinte de mélange **15** (cf. figure 6) peut comprendre une bordure d'extrémité **27** de forme biseautée et forme un angle α par rapport à l'axe longitudinal XX' de l'enceinte de mélange **15** compris entre 20° et 70°, de préférence entre 30° et 60°, et encore plus préférentiellement entre 30° et 45°. Une telle forme de la bordure d'extrémité de l'enceinte de mélange **15** permet de créer un écoulement des fluides de type tourbillonnaire au niveau de l'ouverture **18** ce qui a pour effet d'améliorer l'efficacité de mélange des fluides, notamment en permettant un mélange entre elles des lignes de courant des fluide situées de part et d'autres des parois latérales de l'enceinte de mélange **15.** De plus, une telle configuration de l'enceinte de mélange **15** a pour effet de diminuer la vitesse des fluides entre l'enceinte de mélange et l'enceinte d'échange. En diminuant les vitesses de fluides au niveau de l'ouverture **18**, la perte de charge est minimisée.

En-dessous de la zone de mélange (B) se trouve la zone de distribution (C). La zone de distribution (C) s'étendant sur une hauteur H3 (cf. figure 1) comprend un plateau de distribution **12** supportant une pluralité de cheminées **13**, et une pluralité de panneaux horizontaux **33** (cf. figure 4) situés en-dessous de l'ouverture **31** du plafond **30** de l'enceinte d'échange **16**, mais au-dessus des cheminées **13** ou posés sur les cheminées **13** du plateau de distribution **12.** Plus précisément, les cheminées **13** sont ouvertes à leur partie supérieure par une ouverture supérieure et présentent le long de leur paroi latérale une série d'orifices latéraux destinés au passage séparé de la phase liquide (par les orifices) et la phase gaz (par l'ouverture supérieure) à l'intérieur des cheminées **13**, de manière à réaliser leur mélange intime à l'intérieur desdites cheminées **13.** La forme des orifices latéraux peut être très variable, généralement circulaire ou rectangulaire, ces orifices étant préférentiellement répartis sur chacune des cheminées selon plusieurs niveaux sensiblement identiques d'une cheminée à l'autre, généralement au moins un niveau, et de préférence de 1 à 10 niveaux, de manière à permettre l'établissement d'une interface aussi régulière (plane) que possible entre la phase gaz et la phase liquide. Avantageusement, la hauteur H3 de la zone de distribution est comprise entre 20 et 1500 mm, plus préférentiellement entre 50 et 800 mm, et encore plus préférentiellement entre 100 et 600 mm.

Afin de garantir une distribution homogène des fluides sur le plateau de distribution 12, le dispositif comprend une pluralité de panneaux horizontaux **33** (cf. figure 4) situés dans la zone de distribution (C), en-dessous de l'ouverture **31** du plafond **30** de l'enceinte d'échange **16**, mais au-dessus des cheminées **13** ou posés sur les cheminées **13** du plateau de distribution **12** (cf. figure 1). La présence des panneaux horizontaux **33** permet une pré-distribution des fluides sur le plateau de distribution **12.** Lesdits panneaux horizontaux **33** sont de préférence espacés les uns des autres d'une distance comprise entre 1 et 50 mm, de préférence entre 5 et 20 mm, de manière à permettre l'écoulement des fluides vers l'espace situé entre les panneaux horizontaux **33** et le plateau de distribution **12.** De préférence, lesdits panneaux horizontaux **33** se situent à une hauteur comprise entre 0 et 100 mm des cheminées **13** du plateau de distribution **12.** Lorsque les panneaux horizontaux sont posés sur les cheminées du plateau de distribution, ces dernières sont configurées de manière à permettre le passage des fluides de type gaz, par exemple en présentant une extrémité biseautée. De préférence, la surface de la section transversale occupée par lesdits panneaux horizontaux **33** est dans la plage de 2 à 95 % de la surface de la section transversale de la zone de distribution (C), et plus préférentiellement entre 2 et 20%. Un tel agencement du dispositif selon l'invention permet de garantir une bonne efficacité de mélange des fluides sans pour autant engendrer une augmentation de l'encombrement dudit dispositif. Dans un mode de réalisation particulier selon l'invention, les panneaux horizontaux **33** comprennent une pluralité de perforations permettant l'écoulement des fluides vers l'espace situé entre les panneaux horizontaux **33** et le plateau de distribution **12.** Pour chaque panneau horizontal **33**, la surface occupée par lesdites perforations est comprise entre 1 et 20% en surface, de préférence entre 2 et 5 % en surface, par rapport à la surface totale du panneau horizontal **33.**

Dans un mode de réalisation particulier, l'enceinte d'échange **16** peut également comprendre sur ses parois latérales **20** des sections de passage latéral **17** (cf. figure 3) apte au passage des fluides de la zone de mélange (B) à la zone de distribution (C). En complément, le dispositif peut comprendre éventuellement au moins un déflecteur latéral **32** (cf. figure 5) situé au niveau de ladite zone de distribution (C), en vis-à-vis d'au moins une section de passage latéral **17.** De préférence, le dispositif comprend au moins une paire de déflecteurs latéraux **32** situés dans la zone de distribution (C) de part et d'autre de l'enceinte d'échange **16** en vis-à-vis des sections de passage latéral **17.**

Avantageusement, la zone de mélange (B), i.e. l'enceinte de mélange **15** et l'enceinte d'échange **16**, est décentrée par rapport au centre de la zone de distribution (C) (cf. figure 5). Ce décalage de la zone de mélange par rapport au centre de la zone de distribution a pour avantage de faciliter les opérations d'inspection et de maintenance du dispositif. Cette configuration particulière du dispositif partage le plateau de distribution **12** en deux zones Z1 et Z2 de surfaces différentes, avec Z1 < Z2 (cf. figure 5). On définit les zones Z1 et Z2 respectivement comme la surface du plateau de distribution **12** comprise entre la paroi latérale **20** de l'enceinte d'échange **16**, la périphérie de l'enceinte **1** du réacteur, et respectivement les deux axes AA' et BB' (cf. figure 5) passant par les extrémités **21** et **22** de l'enceinte d'échange **16** (étant entendu que Z1 < Z2). On définit R comme étant le rapport entre la surface de la zone Z1 et de la zone Z2 (R = Z1/Z2), étant entendu que R est compris entre 0 et 1, les valeurs 0 et 1 étant exclues. Ainsi, lorsque le dispositif selon l'invention comprend des sections de passage latéral **17**, et afin de garantir une bonne distribution des fluides sur les deux zones Z1 et Z2 du plateau de distribution **12**, le débit des fluides traversant les sections de passage latéral **17** de l'enceinte d'échange **16** a été adapté en fonction du ratio R. Soit Sp la surface totale des sections de passage latéral **17** de la paroi latérale **20** en vis-à-vis de la zone Z1 du plateau de distribution **12** (i.e. se trouvant du côté où la surface du plateau de distribution est la plus petite) et Sg la surface totale des sections de passage latéral **17** de la paroi latérale **20** en vis-à-vis de la zone Z2 du plateau de distribution **12** (i.e. se trouvant du côté où la surface du plateau de distribution est la plus grande). Une bonne distribution des fluides sur les deux zones du plateau de distribution est obtenue si le ratio R' entre les surfaces Sp/Sg est compris entre 0,5 et 1,5, de préférence entre 0,6 et 1,4. En effet, en l'absence de moyen particulier de distribution en sortie de l'enceinte d'échange **16**, les deux zones Z1 et Z2 du plateau de distribution **12** sont alimentées par des débits de fluide identiques, ce qui résulte en une mauvaise distribution des fluides, et donc induit une perte significative des performances de distribution des fluides sur le plateau de distribution **12.** Le dispositif selon l'invention, lorsqu'il comprend des sections de passage latéral **17** sur les parois **20** de l'enceinte d'échange **16**, dont la surface totale desdites sections est différente selon que l'on se trouve du côté où la surface de distribution est la plus petite (Z1) ou la plus grande (Z2), permet de générer en sortie de l'enceinte d'échange **16** des pertes de charge qui permettent d'ajuster les débits des fluides selon le ratio R (R=Z1/Z2).

Dans un mode de réalisation selon l'invention, l'enceinte d'échange **16** est posée directement sur les panneaux horizontaux **33** de la zone de distribution (C) (telle que représentée par exemple en figure 1). Dans un autre mode de réalisation (non représenté sur les figures), l'enceinte d'échange **16** est située à une distance « d » desdits plateaux horizontaux **33**, de préférence comprise entre 20 et 150 mm, et plus préférentiellement comprise entre 30 et 80 mm. L'espace compris sous l'enceinte d'échange **16** et les panneaux horizontaux **33** permet la distribution des fluides sur toute la surface desdits plateaux horizontaux **33.** Dans ce mode de réalisation, l'enceinte d'échange **16** peut comprendre en sa partie inférieure des sections de passage longitudinal afin que le mélange des fluides puisse s'écouler directement sur les plateaux horizontaux **33** situés directement en-dessous de l'enceinte d'échange **16.** Bien entendu, le nombre, la forme et la taille des sections de passage longitudinal sont choisis de manière à ce qu'une fraction minoritaire du flux de mélange de fluides traverse lesdites sections de passage longitudinal. Les sections de passage longitudinal peuvent prendre indifféremment la forme d'orifices et/ou de fentes.

En-dessous du plateau de distribution **12**, un système de dispersion peut être positionné de manière à distribuer les fluides uniformément sur le lit de catalyseur **14** situé en aval dudit système. Le système de dispersion **19** (cf. figure 1) peut comprendre un ou plusieurs dispositifs de dispersion pouvant être associé à chaque cheminée **13**, être en commun à plusieurs cheminées **13**, ou encore être en commun à l'ensemble des cheminées **13** du plateau de distribution **12.** Chaque dispositif de dispersion **19** a une géométrie sensiblement plane et horizontale, mais peut avoir un périmètre de forme quelconque. Par ailleurs, chaque dispositif de dispersion **19** peut être situé à différentes hauteurs. Avantageusement, ledit dispositif de dispersion se présente sous la forme de grilles, et/ou peut comprendre éventuellement des déflecteurs. Avantageusement, l'axe de la ou des grille(s) **19** est préférentiellement perpendiculaire à l'axe longitudinal de l'enceinte du réacteur afin d'améliorer la distribution du mélange des fluides sur toute la section radiale de l'enceinte du réacteur. La distance séparant le système de dispersion du lit de solides granulaires situé immédiatement au-dessous est choisie de manière à conserver l'état de mélange des phases gazeuse et liquide autant que possible tel qu'il est en sortie des cheminées **13.**

De préférence, la distance entre le plateau de distribution **12** et lit de catalyseur **14** située en-dessous dudit plateau de distribution est comprise entre 50 et 400 mm, de préférence entre 100 et 300 mm. La distance entre le plateau de distribution **12** et ledit dispositif de dispersion **19** est comprise entre 0 et 400 mm, de préférence entre 0 et 300 mm. Dans un mode de réalisation particulier, le plateau de distribution **12** est posé sur le dispositif de dispersion **19.**

Par rapport aux dispositifs décrits dans l'art antérieur, et encore plus particulièrement par rapport au dispositif divulgué dans le document FR 2 824 495, le dispositif de mélange et de distribution selon l'invention présente les avantages suivants :
- une bonne efficacité thermique et une bonne efficacité de mélange des fluides ;
- une bonne distribution des fluides sur le plateau de distribution **12**, due à la présence d'une ouverture **31** de la boîte d'échange **16** et d'une pluralité de panneaux horizontaux **33** situés au-dessus de l'ouverture **31** de la boîte d'échange **16**, et au-dessus des cheminées **13** ou sur les cheminées **13** du plateau de distribution **12** ;
- lorsque la zone de mélange (B) est décentrée par rapport à l'axe central de la zone de distribution (C), la réalisation des opérations de chargement et/ou de déchargement du catalyseur situé en-dessous et/ou en dessus du dispositif est beaucoup plus aisé car il n'est plus nécessaire de démonter ledit dispositif ;
- le dispositif selon l'invention gagne en compacité de manière significative :
   ∘ lorsque l'enceinte d'échange est placé directement sur les panneaux de distribution **33**, eux-mêmes placés directement sur les cheminées **13** du plateau de distribution **12** ; et/ou
   ∘ lorsque la conduite de collecte **7** et le moyen d'injection **8** se situent au niveau de la zone de mélange (B).

## Revendications

1. Dispositif de mélange et de distribution de fluides pour un réacteur catalytique à écoulement descendant, ledit dispositif comprenant :
- au moins une zone de collecte (A) comprenant au moins un moyen de collecte (5) ;
- au moins une conduite de collecte (7) sensiblement verticale apte à recevoir un fluide réactionnel collecté par ledit moyen de collecte (5) et au moins un moyen d'injection (8) débouchant dans ladite conduite de collecte (7) pour injecter un fluide de trempe ;
- au moins une zone de mélange (B), située en aval de ladite conduite de collecte (7) dans le sens de circulation des fluides, ladite zone de mélange (B) comprenant au moins une enceinte de mélange (15) des fluides de longueur L1, ladite zone de mélange (15) comprenant une première extrémité en communication avec ladite conduite de collecte (7) et une seconde extrémité en communication avec une enceinte d'échange (16) des fluides de longueur L2, située en-dessous de ladite enceinte de mélange (15), la longueur L2 de ladite enceinte d'échange (16) étant strictement supérieure à la longueur L1 de ladite enceinte de mélange (15) de manière à créer un plafond (30) au niveau de ladite enceinte d'échange (16), ledit plafond (30) comprenant au moins une ouverture (31) apte au passage des fluides de ladite enceinte d'échange (16) vers une zone de distribution (C) ;
- au moins une zone de distribution (C), située en-dessous de la zone de mélange (B), en aval de ladite zone de mélange (B) dans le sens de la circulation des fluides, ladite zone de distribution (C) comprenant un plateau de distribution (12) supportant une pluralité de cheminées (13) et une pluralité de panneaux horizontaux (33), située en-dessous de l'ouverture (31) du plafond (30) de l'enceinte d'échange (16), mais au-dessus des cheminées (13) ou sur les cheminées (13) du plateau de distribution (12) de la zone de distribution (C).

2. Dispositif selon la revendication 1, **caractérisé en ce que** le rapport entre la longueur L1 de l'enceinte de mélange (15) et la longueur L2 de l'enceinte d'échange (16) est compris entre 0,1 et 0,9.

3. Dispositif selon l'une des revendications 1 ou 2, **caractérisé en ce que** le pourcentage en surface occupé par la ou les ouverture(s) (31) est compris entre 20 et 100% par rapport à la surface totale du plafond (30).

4. Dispositif selon la revendication 3, **caractérisé en ce que** le pourcentage en surface occupé par la ou les ouverture(s) (31) est égal à 100% de la surface totale du plafond (30).

5. Dispositif selon l'une quelconque des revendications 1 à 4, **caractérisé en ce que** lesdits panneaux horizontaux (33) se situent à une hauteur d'au plus 100 mm au-dessus des cheminées (13) du plateau de distribution (12).

6. Dispositif selon l'une quelconque des revendications 1 à 4, **caractérisé en ce que** lesdits panneaux horizontaux (33) se situent sur les cheminées (13) du plateau de distribution (12).

7. Dispositif selon l'une quelconque des revendications 1 à 6, **caractérisé en ce que** la surface de la section transversale occupée par lesdits panneaux horizontaux (33) est dans la plage de 2 à 95 % de la surface de la section transversale de la zone de distribution (C).

8. Dispositif selon l'une quelconque des revendications 1 à 7, **caractérisé en ce que** lesdits panneaux horizontaux (33) sont espacés les uns des autres d'une distance comprise entre 1 et 50 mm.

9. Dispositif selon l'une quelconque des revendications 1 à 8, **caractérisé en ce que** ladite zone de mélange (B) est décentrée par rapport à l'axe central de la zone de distribution (C), formant deux zones (Z1) et (Z2) sur le plateau de distribution (12) dont le ratio R défini comme le rapport entre la surface de la zone (Z1) et la zone (Z2) est compris entre 0 et 1, les valeurs 0 et 1 étant exclues.

10. Dispositif selon l'une quelconque des revendications 1 à 9, **caractérisé en ce que** l'enceinte de mélange (15) comprend un fond (23) comportant une bordure d'extrémité (27) de forme biseautée et forme un angle α par rapport à l'axe longitudinal XX' de l'enceinte de mélange (15) compris entre 20° et 70°.

11. Dispositif selon l'une quelconque des revendications 1 à 10, **caractérisé en ce que** le moyen d'injection (8) est complété d'une buse débouchant directement dans ladite conduite de collecte (7), ladite buse consistant en un tube comprenant au moins un orifice débouchant dans ladite conduite de collecte (7).

12. Dispositif selon l'une quelconque des revendications 1 à 11, **caractérisé en ce que** ladite enceinte d'échange (16) comprend en outre sur ses parois latérales (20) une pluralité de sections de passage latéral (17) apte au passage des fluides de ladite enceinte d'échange (16) à ladite zone de distribution (C).

13. Dispositif selon l'une quelconque des revendications 1 à 12, **caractérisé en ce qu'**il comprend en outre au moins un déflecteur latéral (32) situé au niveau de ladite zone de distribution (C) en vis-à-vis d'au moins une section de passage latéral (17).

14. Dispositif selon l'une quelconque des revendications 1 à 13, **caractérisé en ce que** le ratio volume entre ladite enceinte de mélange (15) et ladite enceinte de d'échange (16) est compris entre 5 et 60 %.

15. Réacteur catalytique à écoulement descendant comportant une enceinte (1) renfermant au moins deux lits fixes de catalyseur (2,14) séparés par une zone intermédiaire comportant un dispositif de mélange et de distribution de fluides selon l'une quelconque des revendications 1 à 14.

## Patentansprüche

1. Vorrichtung zur Mischung und Verteilung von Fluiden für einen katalytischen Reaktor mit Abwärtsströmung, wobei die Vorrichtung aufweist:
- wenigstens einen Sammelbereich (A), der wenigstens ein Sammelmittel (5) umfasst;
- wenigstens eine im Wesentlichen vertikale Sammelleitung (7), die geeignet ist, ein von dem Sammelmittel (5) gesammeltes Reaktionsfluid aufzunehmen, und wenigstens ein in die Sammelleitung (7) mündendes Einspritzmittel (8) zum Einspritzen eines Abschreckfluids;
- wenigstens einen Mischbereich (B), der sich, in Strömungsrichtung der Fluide gesehen, stromabwärts der Sammelleitung (7) befindet, wobei der Mischbereich (B) wenigstens einen Mischbehälter (15) für die Fluide mit einer Länge L1 umfasst, wobei der Mischbereich (15) ein erstes Ende, das mit der Sammelleitung (7) in Verbindung steht, und ein zweites Ende, das mit einem Austauschbehälter (16) der Fluide mit einer Länge L2 in Verbindung steht, der sich unterhalb des Mischbehälters (15) befindet, umfasst, wobei die Länge L2 des Austauschbehälters (16) streng größer als die Länge L1 des Mischbehälters (15) ist, so dass eine Decke (30) am Austauschbehälter (16) erzeugt wird, wobei die Decke (30) wenigstens eine Öffnung (31) umfasst, die für das Durchströmen der Fluide vom Austauschbehälter (16) zu einem Verteilungsbereich (C) hin geeignet ist;
- wenigstens einen Verteilungsbereich (C), der sich unterhalb des Mischbereichs (B) befindet, stromabwärts des Mischbereichs (B), in Strömungsrichtung der Fluide gesehen, wobei der Verteilungsbereich (C) eine Verteilungsplatte (12), die mehrere Kamine (13) trägt, und mehrere horizontale Platten (33), die sich unterhalb der Öffnung (31) der Decke (30) des Austauschbehälters (16), jedoch oberhalb der Kamine (13) oder auf den Kaminen (13) der Verteilungsplatte (12) des Verteilungsbereichs (C) befinden, umfasst.

2. Vorrichtung nach Anspruch 1, **dadurch gekennzeichnet, dass** das Verhältnis zwischen der Länge L1 des Mischbehälters (15) und der Länge L2 des Austauschbehälters (16) zwischen 0,1 und 0,9 liegt.

3. Vorrichtung nach einem der Ansprüche 1 oder 2, **dadurch gekennzeichnet, dass** der Flächenanteil, der von der oder den Öffnung (en) (31) eingenommen wird, zwischen 20 und 100 % liegt, bezogen auf die Gesamtfläche der Decke (30).

4. Vorrichtung nach Anspruch 3, **dadurch gekennzeichnet, dass** der Flächenanteil, der von der oder den Öffnung (en) (31) eingenommen wird, gleich 100 % der Gesamtfläche der Decke (30) ist.

5. Vorrichtung nach einem der Ansprüche 1 bis 4, **dadurch gekennzeichnet, dass** sich die horizontalen Platten (33) auf einer Höhe von höchstens 100 mm über den Kaminen (13) der Verteilungsplatte (12) befinden.

6. Vorrichtung nach einem der Ansprüche 1 bis 4, **dadurch gekennzeichnet, dass** sich die horizontalen Platten (33) auf den Kaminen (13) der Verteilungsplatte (12) befinden.

7. Vorrichtung nach einem der Ansprüche 1 bis 6, **dadurch gekennzeichnet, dass** die Fläche des Querschnitts, die von den horizontalen Platten (33) eingenommen wird, im Bereich von 2 bis 95 % der Fläche des Querschnitts des Verteilungsbereichs (C) liegt.

8. Vorrichtung nach einem der Ansprüche 1 bis 7, **dadurch gekennzeichnet, dass** die horizontalen Platten (33) in einem Abstand zwischen 1 und 50 mm voneinander angeordnet sind.

9. Vorrichtung nach einem der Ansprüche 1 bis 8, **dadurch gekennzeichnet, dass** der Mischbereich (B) in Bezug auf die Mittelachse des Verteilungsbereichs (C) außermittig versetzt ist, wobei auf der Verteilungsplatte (12) zwei Bereiche (Z1) und (Z2) gebildet werden, deren Verhältnis R, definiert als das Verhältnis zwischen der Fläche des Bereichs (Z1) und des Bereichs (Z2), zwischen 0 und 1 liegt, wobei die Werte 0 und 1 nicht mit inbegriffen sind.

10. Vorrichtung nach einem der Ansprüche 1 bis 9, **dadurch gekennzeichnet, dass** der Mischbehälter (15) einen Boden (23) umfasst, der einen Endrand (27) von abgeschrägter Form aufweist, der einen Winkel α bezüglich der Längsachse XX' des Mischbehälters (15) bildet, der zwischen 20° und 70° liegt.

11. Vorrichtung nach einem der Ansprüche 1 bis 10, **dadurch gekennzeichnet, dass** das Einspritzmittel (8) durch eine direkt in die Sammelleitung (7) mündende Düse ergänzt wird, wobei die Düse aus einem Rohr besteht, das wenigstens eine in die Sammelleitung (7) mündende Öffnung umfasst.

12. Vorrichtung nach einem der Ansprüche 1 bis 11, **dadurch gekennzeichnet, dass** der Austauschbehälter (16) außerdem an seinen Seitenwänden (20) mehrere Abschnitte für den seitlichen Durchfluss (17) umfasst, die für den Durchfluss der Fluide vom Austauschbehälter (16) zum Verteilungsbereich (C) geeignet sind.

13. Vorrichtung nach einem der Ansprüche 1 bis 12, **dadurch gekennzeichnet, dass** sie außerdem wenigstens eine seitliche Ablenkplatte (32) umfasst, die sich am Verteilungsbereich (C) gegenüber wenigstens einem Abschnitt für den seitlichen Durchfluss (17) befindet.

14. Vorrichtung nach einem der Ansprüche 1 bis 13, **dadurch gekennzeichnet, dass** das Volumenverhältnis zwischen dem Mischbehälter (15) und dem Austauschbehälter (16) zwischen 5 und 60 % liegt.

15. Katalytischer Reaktor mit Abwärtsströmung, welcher einen Behälter (1) aufweist, der wenigstens zwei Katalysatorfestbetten (2, 14) umschließt, die durch einen Zwischenbereich getrennt sind, der eine Vorrichtung zur Mischung und Verteilung von Fluiden nach einem der Ansprüche 1 bis 14 aufweist.

## Claims

1. Fluid distribution and mixing device for a downflow catalytic reactor, said device comprising:
- at least one collection zone (A) comprising at least one collection means (5);
- at least one essentially vertical collection duct (7) that is able to receive a reaction fluid that is collected by said collection means (5) and at least one injection means (8) opening into said collection duct (7) for injecting a quench fluid;
- at least one mixing zone (B) located downstream of said collection duct (7) in the direction of circulation of the fluids, said mixing zone (B) comprising at least one mixing enclosure (15) for mixing the fluids, of length L1, said mixing zone (15) comprising a first end in communication with said collection duct (7) and a second end in communication with an exchange enclosure (16) for exchange of the fluids, of length L2, located below said mixing enclosure (15), the length L2 of said exchange enclosure (16) being strictly greater than the length L1 of said mixing enclosure (15) so as to create a ceiling (30) above said exchange enclosure (16), said ceiling (30) comprising at least one opening (31) that is suitable for the fluids to pass from said exchange enclosure (16) towards a distribution zone (C);
- at least one distribution zone (C) located below the mixing zone (B), downstream of said mixing zone (B) in the direction of flow of the fluids, said distribution zone (C) comprising a distribution plate (12) supporting a plurality of chimneys (13) and a plurality of horizontal panels (33), located below the opening (31) of the ceiling (30) of the exchange enclosure (16), but above the chimneys (13) or on the chimneys (13) of the distribution plate (12) of the distribution zone (C).

2. Device according to Claim 1, **characterized in that** the ratio between the length L1 of the mixing enclosure (15) and the length L2 of the exchange enclosure (16) is between 0.1 and 0.9.

3. Device according to either of Claims 1 and 2, **characterized in that** the percentage of surface area taken up by the opening (s) (31) is between 20 and 100% with respect to the total surface area of the ceiling (30).

4. Device according to Claim 3, **characterized in that** the percentage of surface area taken up by the opening(s) (31) is equal to 100% with respect to the total surface area of the ceiling (30).

5. Device according to any one of Claims 1 to 4, **characterized in that** said horizontal panels (33) are at a height of at most 100 mm above the chimneys (13) of the distribution plate (12).

6. Device according to any one of Claims 1 to 4, **characterized in that** said horizontal panels (33) are on the chimneys (13) of the distribution plate (12) .

7. Device according to any one of Claims 1 to 6, **characterized in that** the surface area of the cross section taken up by said horizontal panels (33) is in the range from 2 to 95% of the surface area of the cross section of the distribution zone (C).

8. Device according to any one of Claims 1 to 7, **characterized in that** said horizontal panels (33) are spaced apart from one another by a distance of between 1 and 50 mm.

9. Device according to any one of Claims 1 to 8, **characterized in that** said mixing zone (B) is off-centre with respect to the central axis of the distribution zone (C), forming two zones (Z1) and (Z2) on the distribution plate (12), the ratio R of which, defined as the ratio between the surface area of the zone (Z1) and the zone (Z2), is comprised between 0 and 1, the values 0 and 1 being excluded.

10. Device according to any one of Claims 1 to 9, **characterized in that** the mixing enclosure (15) comprises a bottom (23) having an end edge (27) that is bevelled in shape and forms an angle α with respect to the longitudinal axis XX' of the mixing enclosure (15) between 20° and 70°.

11. Device according to any one of Claims 1 to 10, **characterized in that** the injection means (8) is complemented with a nozzle that opens directly into said collection duct (7), said nozzle consisting of a tube comprising at least one orifice that opens into said collection duct (7).

12. Device according to any one of Claims 1 to 11, **characterized in that** said exchange enclosure (16) further comprises, on its side walls (20), a plurality of lateral passage sections (17) suitable for the fluids to pass from said exchange enclosure (16) to said distribution zone (C).

13. Device according to any one of Claims 1 to 12, **characterized in that** it further comprises at least one lateral deflector (32) located at said distribution zone (C) facing at least one lateral passage section (17).

14. Device according to any one of Claims 1 to 13, **characterized in that** the volume ratio between said mixing enclosure (15) and said exchange enclosure (16) is between 5 and 60%.

15. Downflow catalytic reactor comprising an enclosure (1) enclosing at least two fixed catalyst beds (2, 14) separated by an intermediate zone comprising a fluid distribution and mixing device according to any one of Claims 1 to 14.
